# EUROPÄISCHE PATENTANMELDUNG

(11) **EP 1 847 697 A1**
(43) Veröffentlichungstag der Anmeldung: **24.10.2007**
(21) Anmeldenummer: 06008322.7
(22) Anmeldetag: 21.04.2006
(51) Int. Cl.: F02C 3/16, F01D 5/18, F02K 3/10, F01D 9/06

(54) **Verfahren zum Nachheizen eines eine Turbine durchströmenden Gases sowie dementsprechendes Bauteil für eine Turbine.**

(71) Anmelder: SIEMENS AKTIENGESELLSCHAFT, 80333 München (DE)
(72) Erfinder: Beeck, Alexander Ralph, 32828 Orlando, FL (US); Hoffmann, Stefan, Dr., 35119 Rosenthal (DE)

(57) **Zusammenfassung**

Beschrieben wird ein Verfahren zum Nachheizen eines die Turbine (8) in einer Hauptströmungsrichtung durchströmenden Gases (11) und ein Bauteil (30) mit einer Außenwand (34,46,48,76), in deren von einem Gas (11) beaufschlagbaren Oberfläche (38,40,74) mindestens eine Öffnung (42) zum Zuführen eines ersten Mediums (M1=Brennstoff)) in das Gas (11) mündet, wobei der Brennstoff dem Gas (11) derart zugeführt wird, dass dieser unter Bildung von sich selbst entzündenden Mikrodiffusionsflammen verbrennt (33).

## Beschreibung

Die Erfindung betrifft ein Verfahren zum Nachheizen eines eine Turbine in einer Strömungsrichtung durchströmenden Gases. Außerdem betrifft die Erfindung ein Bauteil für eine Turbine, insbesondere zum Durchführen des Verfahrens, mit einer Außenwand, in deren von einem Gas beaufschlagbaren Oberfläche mindestens eine Öffnung zum Zuführen eines ersten Mediums in das Gas mündet.

Ein derartiges Verfahren und eine das Verfahren ermöglichende Turbinenschaufel ist beispielsweise aus der WO 2005/3517 A1 bekannt. Die das Schaufelblatt bildenden Schaufelwände umgeben einen Hohlraum, in dem Kühlluft strömbar ist. Außerdem sind in der Schaufelwand der Turbinenschaufel weitere Kanäle zum Führen eines zweiten Mediums, nämlich Brennstoff, vorgesehen. Durch mehrere, durch die Schaufelwand der Turbinenschaufel verlaufende Durchgangsbohrungen kann das im Inneren der Turbinenschaufel strömende Kühlmittel nach Außen in einen Gasraum austreten. Um ein brennbares Gemisch noch in der Schaufelwand herzustellen, sind in dieser Verbindungskanäle vorgesehen, welche die brennstoffführenden Kanäle mit den Durchgangsbohrungen verbinden. Somit kann sich der Brennstoff mit der Kühlluft noch innerhalb der Durchgangsbohrungen vermischen und als brennbares Gemisch in das die Turbinenschaufel umströmende Gas eingeblasen werden. Mit einer solchen Turbinenschaufel kann sowohl das die Turbine durchströmende heiße Gas als auch die aus der Turbinenschaufel ausströmende Kühlluft durch das Verbrennen des Gemischs nachgeheizt werden, was im Allgemeinen zur Leistungsgradsteigerung der Gasturbine, zur Reduzierung der Schadstoffemissionen und zur Verbesserung des Wirkungsgrades der Gasturbine durchgeführt wird und als eine Form der Carnotisierung bekannt ist.

Außerdem ist aus der WO 99/46540 A1 eine Brennkammer mit einer Vielzahl von porösen Hitzeschildelementen bekannt, durch die ein brennbares Gemisch nachträglich, d.h. außerhalb von Brennern der Gasturbine, in den Verbrennungsraum einer Gasturbine eingebracht werden kann.

Es kann beim bekannten Stand der Technik auftreten, dass in der zum Nachheizen des Gases konstruierten Turbinenschaufel das brennbare Gemisch durch Flammenrückschlag oder Selbstentzündung innerhalb der dafür nicht vorgesehenen Durchgangsbohrungen oder Verbindungskanäle unter Beschädigung des den Hohlraum umgebenden Materials verbrennt. Dies reduziert die Lebensdauer der Turbinenschaufel und kann in schwerwiegenden Fällen zu enormen Schäden an und in einer damit ausgestatteten Turbine führen.

Außerdem kann das Nachheizen des heißen Gases in der Turbine durch an dieser Stelle nachträglich, d.h. außerhalb des Brenners der Gasturbine, eingebrachten Brennstoff zu ungewollt hohen Emissionen führen. Die hohen Emissionen entstehen aufgrund einer unzureichenden Vermischung von Brennstoff und Luft. Das zum Teil inhomogene Gemisch verbrennt dann nicht vollständig in einer Vormischflamme, sondern auch unter Bildung einer Diffusionsflamme, die in der Regel höhere Spitzentemperaturen aufweist und so zu einer besonders hohen NOx Emittierung führt.

Die Aufgabe der vorliegenden Erfindung ist die Bereitstellung eines Verfahrens zum Nachheizen eines die Turbine in einer Strömungsrichtung durchströmenden Gases, bei dem das in einer Turbine eingebrachte brennbare Gemisch besonders effizient und emissionsarm verbrennt. Weitere Aufgabe der Erfindung ist die Bereitstellung eines gattungsgemäßen Bauteils für eine Turbine zum Nachheizen des die Turbine durchströmenden Gases, bei dem eine im Inneren stattfindende Verbrennung zur Erhaltung der Lebensdauer der Turbinenschaufel und zur Vermeidung von Schäden in der Gasturbine sicher vermieden wird.

Erfindungsgemäß wird die auf die Angabe eines Verfahrens gerichtete Aufgabe durch ein gattungsgemäßes Verfahren gelöst, bei dem ein dem Gas zugeführter Brennstoff unter Bildung von sich selbst entzündenden Mikrodiffusionsflammen verbrennt.

Obwohl prinzipiell eine schnelle und gleichmäßige Durchmischung eines Brennstoffs mit einem Oxidationsmittel anzustreben ist, um eine vorgemischte und somit schadstoffarme Verbrennung herbeizuführen ist, wendet sich die Erfindung den üblicherweise emissionsreichen Diffusionsflammen zu.
Die Erfindung geht von der Erkenntnis aus, dass auch die Diffusionsverbrennung emissionsarm ablaufen kann, sofern die Ausbrandzeit und -länge der an der Verbrennung beteiligten Reaktionspartner stark reduziert werden kann. Die Ausbrandzeit der Reaktionspartner im Gasraum der Turbine kann signifikant durch den Einsatz von äußerst kleiner einzelner Diffusionsflammen, so genannter Mikrodiffusionsflammen, reduziert werden, wodurch die bei dieser Verbrennung entstehende Emissionsbelastung sehr gering ist. Hierdurch werden die üblicherweise an der Diffusionsflamme auftretenden hohen Spitzentemperaturen, die sonst sehr viel NOx emittieren, gesenkt, was eine Entstehung von NOx in nur sehr geringem Umfang zur Folge hat.

Da das den Gasraum durchströmende Gas aufgrund seiner vergleichsweise hohen Strömungsgeschwindigkeit nur eine geringe Verweilzeit in der Turbine aufweist, sind besonders kurze Ausbrandzeiten und -längen von übergeordneter Bedeutung. Die Reduzierung der Ausbrandzeit und -länge wird bei den Mikrodiffusionsflammen durch eine vergrößerte Flammenfläche, in Bezug auf die zur Verbrennung stehende Brennstoffmenge, erreicht und die dadurch die erhöhte Wärmeabstrahlung. Die erhöhte Wärmeabstrahlung in das Gas bewirkt außerdem ein besonders effizientes Nachheizen des die Turbine durchströmenden Gases. Folglich kann der Energiegehalt des Gases durch dieses, auch als "in-situ-blade-reheat" bekannte Verfahren und dementsprechend auch die Leistungsabgabe einer nach dem Verfahren betriebenen Turbine signifikant erhöht werden, ohne die Emissionsbelastung im Gas übermäßig zu vergrößern.

Ferner können durch die Durchführung des erfindungsgemäßen "in-situ-blade-reheat" Verfahrens die bereits bei der Entstehung des Gases in der Brennkammer mit entstandenen Emissionen zur weiteren Reduzierung der Emissionsbelastung des Gases teilweise von den Mikrodiffusionsflammen mit verbrannt werden.

Auch ermöglicht die schnelle Ausbrandzeit vergleichsweise kurze Turbinenbaulängen, d.h. bei Axialturbinen kann die axiale Baulänge verkürzt werden oder muss, aufgrund des Einsatzes des Verfahrens, nicht verlängert werden. Dies spart Material- und Herstellungskosten.

Vorteilhafte Ausgestaltungen des erfindungsgemäßen Verfahrens sind in den Unteransprüchen angegeben.

Bevorzugt wird ein Oxidationsmittel, in Strömungsrichtung des Gases gesehen, unmittelbar stromauf der Zuführposition für Brennstoff dem Gas zugeführt. Das für die emissionsarme Verbrennung des Brennstoffs nötige Oxidationsmittel wird damit so nah stromauf der Zuführposition des Brennstoffs zugeführt, dass dem Brennstoff eine ausreichende Menge von Sauerstoff zur Bildung von Mikrodiffusionsflammen bereitgestellt wird. Die beiden Reaktionspartner weisen dadurch eine vergleichsweise kurze Ausbrandzeit und Ausbrandlänge auf.

Vorzugsweise wird als Oxidationsmittel reiner Sauerstoff, verdichtete Luft oder Kühlluft verwendet, wobei die Kühlluft vor dem Einblasen in das Gas zur Kühlung des Bauteils genutzt werden kann, welches dem Gas ausgesetzt ist.

Erfindungsgemäß wird die auf die Angabe eines Bauteils für eine Turbine gerichtete Aufgabe durch ein gattungsgemäßes Bauteil gelöst, bei dem die Öffnungen derart klein ausgebildet sind, dass beim Zuführen des als Brennstoff ausgebildeten ersten Mediums in das Gas Mikrodiffusionsflammen entstehen. Mikrodiffusionsflammen können nur entstehen, wenn reiner Brennstoff durch eine besonders kleine Öffnung oder Düse in den Gasraum eingebracht werden. Je kleiner die eingespritzte Menge in das Gas ist, umso besser wird das Verhältnis von Brennstoffvolumen zur Oberfläche des betrachteten Brennstoffvolumens, so dass trotz einer sich einstellenden Diffusionsverbrennung besonders niedrige Emissionen bei einer geringen Flammentemperatur erzielt werden.

In bevorzugter Weise weist die dem Gas ausgesetzte Oberfläche des Bauteils eine Vielzahl von Öffnungen auf, um eine besonders große Menge an Brennstoff mit einer großen Brennstoffoberfläche innerhalb einer Zeiteinheit dem Gas zuführen und somit das Gas im besonders starken Maße außerhalb der Brennkammer der Gasturbine emissionsarm Nachheizen zu können.

In einer vorteilhaften Weiterbildung des Bauteils ist jede Öffnung von einer die Außenwand zumindest teilweise durchdringenden Bohrung gebildet, deren der Öffnung gegenüberliegendes Ende in einem Zuführkanal mündet. Hierdurch kann ein besonders einfach herzustellendes Bauteil angegeben werden, mit welchem ein erfindungsgemäßes Verfahren besonders einfach durchführbar ist. Zweckmäßigerweise weisen die Bohrungen einen Durchmesser von 1 mm auf.

Darüber hinaus wird vorgeschlagen, dass zum Zuführen eines zweiten Mediums in das Gas mindestens eine Passage in der Oberfläche der Außenwand mündet, dessen Mündung, in Strömungsrichtung des Gases gesehen, stromauf einer der Öffnungen liegt. Mit einer derartigen Vorrichtung kann dem Gas als zweites Medium ein Oxidationsmittel für den Brennstoff zugeführt werden, wobei dem Oxidationsmittel die Strömungsrichtung des Gases aufgeprägt werden kann und somit vom Gas zu der Stelle transportiert wird, an der der Brennstoff in das Gas eindringt, so dass dem Brennstoff für die Entstehung von Mikrodiffusionsflammen ausreichend Sauerstoff bereitgestellt werden kann. Damit das in das Gas eingedüste zweite Medium sich nur geringfügig mit dem Gas vermischt, bevor dieses zum Brennstoff gelangt, ist vorgesehen, dass der Abstand zwischen der Öffnung und der davon stromauf angeordneten Mündung der Passage kürzer als 2 cm, insbesondere kürzer als 1 cm ist. Durch einen derartigen kurzen Abstand wird gewährleistet, dass das aus der Passagenmündung bzw. aus dem Bauteil ausströmende bzw. in das Gas einströmende Oxidationsmittel in besonders reiner Form, d.h. nahezu unvermischt dem stromab ausströmenden Brennstoff zur Herstellung von besonders emissionsarmen Mikrodiffusionsflammen bereitgestellt werden kann.

In einer weiteren vorteilhaften Ausgestaltung sind jeder in der Oberfläche mündenden Passage mehrere stromab liegende Öffnungen zugeordnet. Es ist also möglich, dass das durch eine Passage ausströmende Oxidationsmittel dem Brennstoff bereitgestellt werden kann, welcher aus unterschiedlichen Öffnungen in das Gas einströmt, ohne das sich negative Effekte, wie beispielsweise eine höhere Emissionsbelastung, einstellen.

Es ist von besonderem Vorteil, wenn die Passage als Kühlluftöffnung oder als Filmkühlöffnung in der Oberfläche der Außenwand mündet. Das durch die Passage in das Gas ausgeblasene zweite Medium dient neben seiner Eigenschaft als Oxidationsmittel dann vorher als Kühlmittel, welches das Bauteil vor den im Gas auftretenden Temperaturen, beispielsweise durch die Ausbildung eines unmittelbar auf der Oberfläche des Bauteils strömenden Kühlluftfilms, wirksam schützt. Alternativ oder zusätzlich dazu kann das Kühlmittel auch im Inneren des Bauteils, also außerhalb des Gasraumes, beispielsweise zu Prallkühlzwecken eingesetzt werden.

Um eine bedarfsgerechte Menge an Oxidationsmittel dem durch die Öffnung eingedüsten Brennstoff bereitzustellen, weist die Öffnung eine Querschnittsfläche auf, die kleiner ist als die Hälfte der Querschnittsfläche der stromauf liegenden Mündung der Passage.

In das Gas kann eine besonders aerodynamische Eindüsung von Brennstoff und/oder von Oxidationsmittel erfolgen, wenn jede Passage und/oder jede Öffnung unter einem spitzen Winkel in der Oberfläche der Außenwand mündet; mit anderen Worten: die Ausströmrichtung des betreffenden Mediums weist mindestens eine gleich gerichtete Strömungskomponente wie das Gas auf. Aerodynamische Strömungsverluste im Gas werden so vermieden.

Bevorzugt ist auf der mit Gas beaufschlagbaren Oberfläche, stromab der Öffnung, bezogen auf die Gasströmungsrichtung, mindestens ein Verwirbelungselement angeordnet. Das Verwirbelungselement hat die Aufgabe, gegebenenfalls noch unverbrannten, aber bereits im Gas befindlichen Brennstoff mit dem Gas und gegebenenfalls mit dem Oxidationsmittel zu vermischen, damit der noch unverbrannte Brennstoff nicht ungenutzt die Turbine durchströmt, sondern rechtzeitig unter Bildung einer Mikrodiffusionsflamme oder Vormischflamme zur Temperaturerhöhung des Gases verbrennt. Folglich kann durch die Verwendung von Verwirbelungselementen, welche beispielsweise Turbulatoren, Rillen, ein Feld aus Pins oder Dimpels sein können, eine besonders effiziente Ausnutzung des in das Gas in der Turbine eingebrachten Brennstoffs erzielt werden.

Bevorzugt ist das Bauteil als Turbinenlaufschaufel, als Turbinenleitschaufel, als Plattform oder als Führungsring ausgebildet. Eine mit diesen Bauteilen ausgestattete Gasturbine weist sinnentsprechend die vorgenannten Vorteile auf.

Selbstverständlich kann das vorgeschlagene Bauteil auch zur Zugabe anderer fluider Medien als Brennstoff oder Luft innerhalb einer Turbine, unabhängig davon ob Gas- oder Dampfturbine, eingesetzt werden.

Durch eine der Diffusionsverbrennung nachfolgenden Vermischung innerhalb einer kurzen Reaktionsstrecke und Reaktionszeit wird außerdem erreicht, dass noch unverbrannter Brennstoff rechtszeitig, d. h. noch vor dem Verlassen des ringkanalförmigen Gasraumes verbrennt, da die durch die Nachheizung stattfindende Energieerhöhung des Gases nur dann zur Leistungssteigerung und Wirkungsgradsteigerung der Turbine beträgt, wenn das nachgeheizte Gas noch an den Laufschaufeln der Turbine zur Umsetzung der Strömungsenergie in mechanische Energie vorbeiströmt.

Weitere Vorteile und Merkmale sind der folgenden Beschreibung von Ausführungsbeispielen zu entnehmen. Im Wesentlichen gleich bleibende Elemente sind mit den gleichen Bezugszeichen bezeichnet.

Es zeigen:
- FIG 1: eine teilgeschnittene Ansicht einer Gasturbine,
- FIG 2: eine perspektivische Darstellung eines als Turbinenlaufschaufel ausgebildeten erfindungsgemäβen Bauteils,
- FIG 3: eine perspektivische Ansicht eines Schaufelblatts der Turbinenschaufel mit in der Oberfläche vorgesehenen Öffnungen zum Ausblasen eines Brennstoffs,
- FIG 4: eine perspektivische Darstellung der Turbinenschaufel mit auf ihrer Oberfläche angeordneten Verwirbelungselementen und
- FIG 5: eine teilgeschnittene perspektivische Darstellung eines Führungsrings einer Turbine.

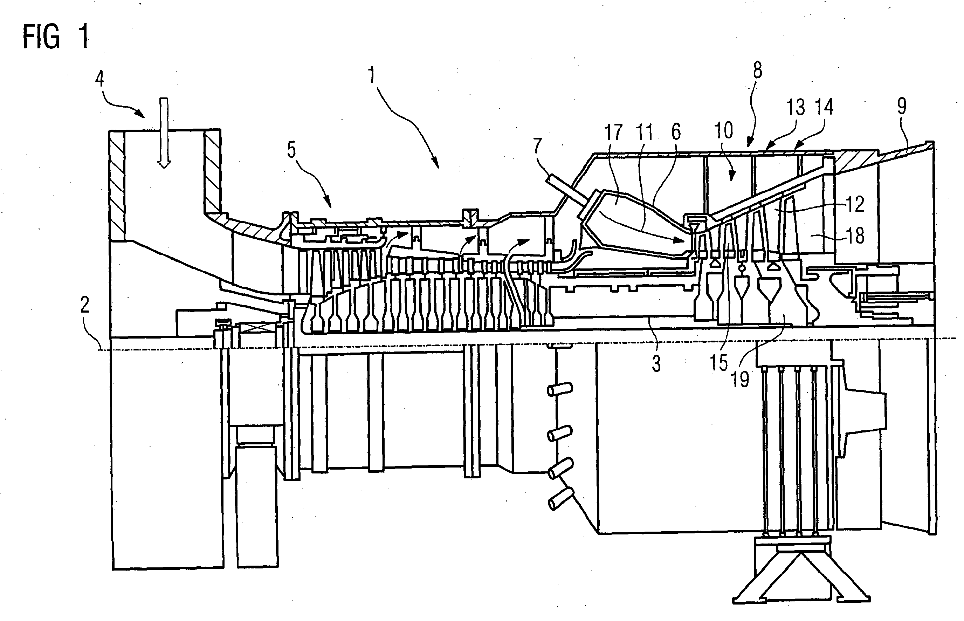

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Gasraum 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten heißen Gases 11 gesehen, folgt im Gasraum 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Turbinenscheibe am Rotor 3 angebracht sind. An dem Rotor 3 ist ein Generator oder eine Arbeitsmaschine (nicht dargestellt) angekoppelt.

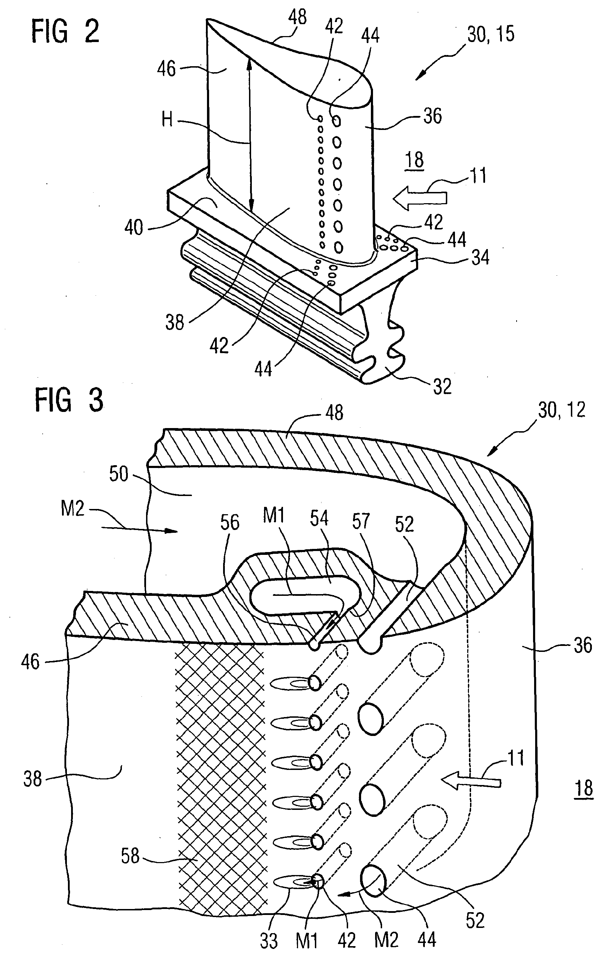

FIG 2 zeigt als erfindungsgemäßes Bauteil 30 in perspektivischer Darstellung eine Turbinenschaufel 15, welche als Laufschaufel 15 ausgebildet ist. Die Laufschaufel 15 weist entlang ihrer in Einbaulage radialen Erstreckung einen Schaufelfuß 32 auf, an dem sich eine Plattform 34 und daran ein dem heißen Gas 11 aussetzbares Schaufelblatt 36 anschließt. Die Plattform 34 begrenzt teilweise den ringkanalförmigen Gasraum 18 der Turbineneinheit 8.

Die Laufschaufel 15 ist derartig hohl ausgebildet, dass in ihrem Inneren zwei unterschiedliche Medien voneinander getrennt führbar sind. Die Zufuhr der Medien erfolgt durch im Schaufelfuß 32 angeordnete Öffnungen. Diese Öffnungen liegen weiteren Öffnungen eines in den Rotorscheiben 19 angeordneten Kanalsystems gegenüber. Das Kanalsystem ist geeignet, die beiden in der Laufschaufel 15 getrennt geführten Medien in geeigneter Weise der Laufschaufel 15 getrennt zuzuführen.

Das sich in Radialrichtung des Rotors 3 erstreckende Schaufelblatt 36 weist eine saugseitige Schaufelwand 46 sowie eine druckseitige Schaufelwand 48 auf, in deren Oberfläche 38 eine Vielzahl von Öffnungen 42 vorgesehen sind. Dabei sind die Öffnungen 42 über die sich entlang der Radialrichtung erstreckende Höhe H des Schaufelblattes 36 gleichmäßig verteilt, so dass das zu der Reihe senkrecht strömende Gas 11 über die gesamte Höhe H des Schaufelblattes 36 mit dem ersten Medium M1 behandelt werden kann.

Auch in der Oberfläche 40 der Plattform 34 sind eine Vielzahl kleiner Öffnungen 42 vorgesehen, durch die das im Inneren der Laufschaufel 15 strömende erste Medium M1, vorzugsweise Brennstoff, in das heiße Gas 11 eingeblasen werden kann.

Die in der Oberfläche 38, 40 vorgesehenen Öffnungen 42 sind dabei derart klein, dass beim Zuführen des als Brennstoff ausgebildeten ersten Mediums M1 Mikrodiffusionsflammen 33 (FIG 3) entstehen, welche sich aufgrund der im Gas 11 auftretenden Temperatur selbsttätig entzünden.

Da das erste Medium M1 als reiner Brennstoff dem Gas 11 zugeführt wird, kann erst nach dessen Austritt aus der Laufschaufel 15 die Oxidation des Brennstoffs mit dem im heißen Gas 11 befindlichen Sauerstoff ablaufen, sodass das Verbrennen des Brennstoffs innerhalb des Bauteils 30 sicher vermieden wird.

Durch die Vielzahl kleiner Öffnungen 42 wird ein besonderes gutes Verhältnis von Brennstoffmenge zu Brennstoffoberfläche erzielt, so dass der für die Verbrennung notwendige Sauerstoff an einer besonders großen Oberfläche des Brennstoffs ansteht, was trotz einer sich einstellenden Mikrodiffusionsflamme zu vergleichsweise niedrigen Emissionen führt.

Um den für die Diffusionsverbrennung des Brennstoffs M1 notwendigen Sauerstoffgehalt im Heißgas 11 zu verbessern, sind, bezogen auf die Strömungsrichtung des Heißgases 11, stromauf der Öffnungen 42 Mündungen 44 von Passagen 52 vorgesehen, durch die ein ebenfalls im Inneren der Laufschaufel 15 strömendes zweites Medium M2, beispielsweise Kühlluft, in das Heißgas 11 eingebracht werden kann. Die Mündungen 44 weisen einen Querschnitt auf, der im Wesentlichen doppelt so groß ist wie der Querschnitt der nachgelagerten, d. h. stromabwärtigen, Öffnung 42.

Das in der Turbineneinheit 8 mit hoher Geschwindigkeit strömende Gas 11 kann somit durch den durch die Laufschaufel 15 zugeführten Brennstoff M1 nachgeheizt werden, wodurch sich der Energiegehalt im Gas 11. erhöht. Durch Impulsübertrag an den Laufschaufeln 15 wird die Energie an der Rotorwelle der Gasturbine 1 übertragen, die dann als Nutzenergie der Arbeitsmaschine bzw. dem Generator zur Verfügung steht.

FIG 3 zeigt in perspektivischer Darstellung einen Schnitt durch eine erfindungsgemäße Leitschaufel 12, welche auch geeignet ist, das Verfahren zum Nachheizen eines die Turbineneinheit 8 in einer Hauptströmungsrichtung durchströmenden Gases 11 durchzuführen. Wie die in FIG 3 gezeigte Laufschaufel 15 weist die Leitschaufel 12 in ihrer saugseitigen Schaufelwand 46 eine Vielzahl von Öffnungen 42 auf, durch die der im Inneren bzw. in der Schaufelwand 46 geführte Brennstoff in das Gas 11 eingeblasen werden kann. Stromauf - in Strömungsrichtung des Gases 11 gesehen - sind Mündungen 44 in der Oberfläche 38 des Schaufelblattes 36 vorgesehen, damit dem unmittelbar stromab der Mündungen 44 eingedüsten Brennstoff eine ausreichende Menge an Sauerstoff bereitgestellt werden kann.

Der von den Schaufelwänden 46, 48 eingeschlossene Hohlraum 50 dient zur Führung des zweiten Mediums M2, beispielsweise Kühlluft. Der Hohlraum 50 ist über Passagen 52 mit dem außerhalb des Schaufelblattes 36 liegenden Gasraum 18 verbunden, in dem die Passagen 52 in der Oberfläche 38 des Schaufelblattes 36 münden. Ebenso ist der in der Schaufelwand 46 sich ebenfalls in Radialrichtung erstreckende Kanal 54 für das erste Medium M1, Brennstoff, mit dem Gasraum 18 verbunden, indem sich die durch die Schaufelwand 46 teilweise erstreckenden Bohrungen 56 jeweils einerseits im Hohlraum 54 und andererseits in der Oberfläche 38 der Schaufelwand 46 münden.

Die Mündungen 44 der Passagen 52 können als so genannte Filmkühlöffnungen, ggf. auch mit einer nicht kreisrunden Kontur in der Oberfläche 38 des Schaufelblattes 36 münden und zum Schutz des die Schaufelwand 46, 48 bildenden Materials einen durch sie ausströmenden flächigen Kühlluftfilm ermöglichen bzw. herbeiführen. In Strömungsrichtung des Gases 11 gesehen kann stromab der Öffnungen 42 ein Feld von Rillen, Rippen oder Dimpeln, also Verwirbelungselementen 58, vorgesehen sein, mittels denen nach erfolgter Diffusionsverbrennung eine Durchmischung des in das Gas 11 eingebrachten ersten und ggf. zweiten Mediums M1, M2 herbeigeführt werden kann, um eventuell noch nicht verbrannte Anteile von Brennstoff mit Kühlluft und Gas 11 zum rechtzeitigen Verbrennen zu durchmischen.

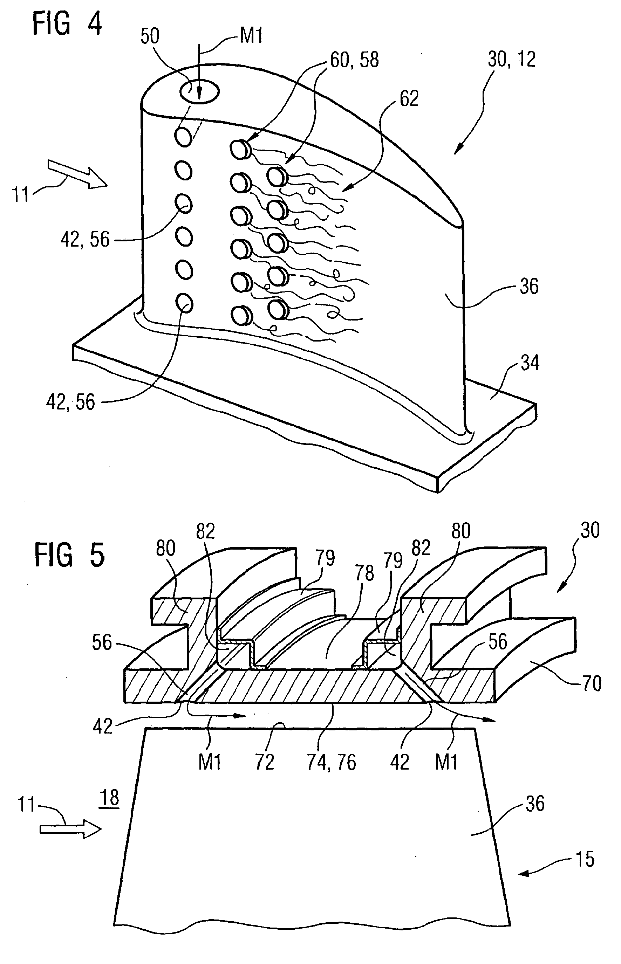

FIG 4 zeigt als weiteres Bauteil 30 eine Leitschaufel 12 mit im Inneren nur einem Hohlraum 50, durch den das erste Medium M1 strömen und durch Bohrungen 56 in das das Schaufelblatt 36 umströmende Gas 11 eingeblasen werden kann. Anstelle von kreuzweise schräg verlaufenden Rillen oder Turbulatoren sind an der Oberfläche des Schaufelblattes 36 Dimpels oder hervorstehende Pins 60 angeordnet, die das durch die Öffnungen 42 in das Gas 11 eingebrachte erste Medium M1 durch die Erzeugung von an den Verwirbelungselementen 58 entstehenden rückstromfreien Wirbeln 62 mit dem Gas 11 vermischen, um eine besonders kurze Ausbrennzeit und -länge zu erreichen, was auch zu einer besonders geringen Schadstoffbelastung des Gases 11 führt.

Alternativ oder zusätzlich kann die Ausblasung des ersten Mediums M1 auch an der Hinterkante der Turbinenschaufel 15 erfolgen. Dies hat den Vorteil, dass das die Turbinenschaufel 15 umströmende Heißgas 11 das ausströmende Medium M1 aufgrund von nahezu identischen Strömungsrichtungen nicht in das Schaufelinnere zurückdrängen kann, was einen Flammenrückschlag begünstigen könnte. Das Heißgas 11 trägt nämlich den Brennstoff von der Turbinenschaufel 15 weg.

FIG 5 zeigt als weiteres Bauteil 30 in einer geschnittenen perspektivischen Darstellung einen Führungsring 70, welcher mit seiner Außenwand 76 der Spitze 72 einer umlaufenden Laufschaufel 15 gegenüber liegt und den ringförmigen Gasraum 18 radial außen begrenzt. Der Führungsring 70 kann auch als Bauteil 30 geeignet sein, den Brennstoff in den Gasraum 18 der Gasturbine 1 einzudüsen, um durch seine Einbeziehung noch mehr Brennstoff dem Gas zuzuführen und somit die Wirkungsgradsteigerung und Leistungssteigerung weiter zu erhöhen. Der Führungsring 70 ist üblicherweise aus mehreren, in Umfangsrichtung unterteilten Segmenten gebildet und weist mehrere durch die Außenwand 76 verlaufende Bohrungen 56 auf, deren erste Enden als Öffnungen 42 in der dem Gas 11 ausgesetzten Oberfläche 74 liegen. Die Öffnungen 42 sind entlang des Umfangs auf einer Kreislinie liegend gleichmäßig verteilt, um eine gleichmäßige und homogene Nachheizung zu ermöglichen. Selbstverständlich kann der Führungsring auch dazu genutzt werden, Brennstoff in größerem Maße unter Bildung von Vormischflammen dem Gasraum 18 zur Erhöhung des Wirkungsgrades der Gasturbine zuzuführen.

An der rückseitigen, d.h. der der heißen Gasseite abgewandten Oberfläche 78 der Außenwand 76 des Führungsrings 70 sind zum Zuführen des ersten Mediums M1 blechartige Winkelstreben 79 in Umfangsrichtung angeschweißt, die jeweils mit einem Befestigungshaken 80 einen in Unfangsrichtung umlaufenden Kanal 82 bilden, in denen die zweiten Enden der Bohrungen 56 münden.

Entlang der rückseitigen Oberfläche 78 kann außerdem das zweite Medium M2 geführt werden, welches bei Vorhandensein von in der Außenwand 76 angeordneten Passagen, die in analoger Weise zur den in FIG 3 und FIG 4 dargestellten Turbinenschaufeln ausgebildet sind, stromauf der Öffnungen 42 dem Gas 11 zugeführt werden kann.

Ingesamt wird mit der Erfindung ein Verfahren zum Nachheizen eines eine Turbine durchströmenden Arbeitsmediums oder Gases und ein Bauteil zum Durchführen des .Verfahrens angegeben, bei dem der dem Arbeitsmedium zugeführte Brennstoff unter Bildung von Mikrodiffusionsflammen emissionsarm verbrennt, was aufgrund von geringen Verweilzeiten des Gases in der Turbine zwingend erforderlich ist, damit der Brennstoff noch rechtzeitig innerhalb der Turbine verbrennt und sich noch an den Laufschaufeln der Turbine arbeitsleistend entspannen kann.

## Patentansprüche

1. Verfahren zum Nachheizen eines die Turbine (8) in einer Hauptströmungsrichtung durchströmenden Gases (11),
**dadurch gekennzeichnet, dass**
ein dem Gas (11) zugeführter Brennstoff unter Bildung von sich selbst entzündenden Mikrodiffusionsflammen verbrennt.

2. Verfahren nach Anspruch 1,
bei dem ein Oxidationsmittel, in Hauptströmungsrichtung gesehen, unmittelbar stromauf der Zuführposition für Brennstoff dem Gas (11) zugeführt wird.

3. Verfahren nach Anspruch 2,
bei dem als Oxidationsmittel reiner Sauerstoff, verdichtete Luft oder Kühlluft verwendet wird.

4. Bauteil (30),
insbesondere zum Durchführen des Verfahrens nach einem der Ansprüche 1 bis 3,
mit einer Außenwand (34, 46, 48, 76), in deren von einem Gas (11) beaufschlagbaren Oberfläche (38, 40, 74) mindestens eine Öffnung (42) zum Zuführen eines erstes Mediums (M1) in das Gas (11) mündet,
**dadurch gekennzeichnet, dass**
die Öffnung (42) derart klein ist, dass beim Zuführen des als Brennstoff ausgebildeten ersten Mediums (M1) Mikrodiffusionsflammen (33) entstehen.

5. Bauteil (30) nach Anspruch 4,
bei dem in der Oberfläche (38, 40, 74) eine Vielzahl von Öffnungen (42) vorgesehen ist.

6. Bauteil (30) nach Anspruch 4 oder 5,
bei dem jede Öffnung (42) von einer die Außenwand (34, 46, 48, 76) zumindest teilweise durchdringenden Bohrung (56) gebildet ist, deren der Öffnung (42) gegenüberliegendes Ende (57) in einem Zuführkanal (54) mündet.

7. Bauteil (30) nach Anspruch 6,
bei dem die Bohrung (56) einen Durchmesser von maximal 1 mm ausweist.

8. Bauteil (30) nach einem der Ansprüche 4 bis 7,
bei dem zum Zuführen eines zweiten Mediums (M2) in das Gas (11) mindestens eine Passage (52) in der Oberfläche (38, 40) der Außenwand (34, 46, 48, 76) mündet,
deren Mündung (44) in Strömungsrichtung des Gases (11) gesehen, stromauf einer der Öffnung (42) liegt.

9. Bauteil (30) nach Anspruch 8,
bei dem der in Strömungsrichtung des Gases (11) gesehene Abstand zwischen der Öffnung (42) und der davon stromauf angeordneten Mündung (44) der Passage (52) geringer als 2 cm, vorzugsweise geringer als 1 cm, ist.

10. Bauteil (30) nach Anspruch 8 oder 9,
bei dem jeder in der Oberfläche (38, 40, 74) mündenden Passage (52) mehrere stromab liegende Öffnungen (42) zugeordnet sind.

11. Bauteil (30) nach einem der Ansprüche 8 bis 10,
bei dem die Passage (52) als Kühlluftöffnung (42) oder als Filmkühlöffnung (42) in der Oberfläche (38, 40, 74) der Außenwand (34, 46, 48, 76) mündet.

12. Bauteil (30) nach einem der Ansprüche 8 bis 11,
bei dem die Öffnung (42) eine Querschnittsfläche aufweist, die kleiner als die Hälfte der Querschnittsfläche der stromauf liegenden Mündung (44) der Passage (52) ist.

13. Bauteil (30) nach einem der Ansprüche 4 bis 12,
bei dem jede Passage (52) und/oder jede Öffnung (42) unter einem spitzen Winkel in der Oberfläche (38, 40, 74) der Außenwand (34, 46, 48, 76) mündet.

14. Bauteil (30) nach einem der Ansprüche 4 bis 13,
bei dem auf der mit Gas (11) beaufschlagbaren Oberfläche (38, 40) stromab der Öffnung (42), bezogen auf die Gasströmungsrichtung, mindestens ein Verwirbelungselement (58) angeordnet ist.

15. Bauteil (30) nach Anspruch 14,
bei dem das Verwirbelungselement (58) ein Turbulator, ein Rippenfeld oder ein Dimpel ist.

16. Bauteil (30) nach einem der Ansprüche 4 bis 15, ausgebildet als Turbinenschaufel (12, 15), als Plattform (34) oder als Führungsring (70).

17. Turbine (1) mit einem Bauteil (30) nach einem der Ansprüche 4 bis 16.
